# EUROPEAN PATENT SPECIFICATION

(11) **EP 3 187 988 B1**
(45) Date of publication and mention of the grant of the patent: **03.03.2021**
(21) Application number: 14882141.6
(22) Date of filing: 21.10.2014
(51) Int. Cl.: G06F 3/041, G06F 3/043

(54) **SURFACE ACOUSTIC WAVE TOUCH SCREEN AND TOUCH DISPLAY APPARATUS**
OBERFLÄCHENWELLEN-BERÜHRUNGSSCHIRM UND BERÜHRUNGSANZEIGEVORRICHTUNG
ÉCRAN TACTILE À ONDE ACOUSTIQUE DE SURFACE ET APPAREIL D'AFFICHAGE TACTILE

(30) Priority: 27.08.2014 CN 201410427715
(43) Date of publication of application: 05.07.2017
(73) Proprietor: BOE Technology Group Co., Ltd., Beijing 100015 (CN); Hefei Xinsheng Optoelectronics Technology Co. Ltd, Anhui 230011 (CN)
(72) Inventor: SHA, Jin, Beijing 100176 (CN)
(74) Representative: Klunker IP Patentanwälte PartG mbB
(86) International application number: PCT/CN2014/089056
(87) International publication number: WO 2016/029536

(56) References cited:
- EP-A1- 2 385 446
- EP-A2- 1 862 889
- CN-A- 102 495 700
- CN-A- 102 819 357
- US-A1- 2008 062 151
- US-A1- 2011 234 545

## Description

### TECHNICAL FIELD

The present invention relates to a surface acoustic wave touch screen and a touch display device employing the above-mentioned surface acoustic wave touch screen.

### BACKGROUND

A surface acoustic wave touch screen is a screen that identifies touch acts by detecting influence on surface acoustic wave (one type of ultrasonic wave) transmission by touch and is widely used in a CRT (cathode ray tube) display, an OLED (organic light emitting diode display), an LCD (liquid crystal display) and a PDP (plasma display panel) due to its advantages such as high definition, good light transmittance, sensitive response and immunity to environmental factors such as temperature and humidity.

EP 2 385 446 A1 describes a touch sensor comprising a substrate propagating acoustic waves. The substrate includes a first surface having a touch sensitive region and a first sidewall intersecting the first surface along a first edge. The first edge is configured to propagate a first acoustic wave along the first edge, and the first surface is configured to propagate a second acoustic wave across the touch sensitive region, the second acoustic wave being based on the first acoustic wave. The touch sensor further comprises a wave converter for converting the first acoustic wave to the second acoustic wave.

EP 1 862 889 A2 describes an acoustic wave type touch panel equipped with a substrate that objects contact; reflective arrays having a great number of inclined lines provided on the substrate; acoustic wave generating sections provided on the substrate; and detecting sections provided on the substrate.

### SUMMARY

It is an object of the present invention to provide a surface acoustic wave touch screen and a touch display device which may solve one or more problems set forth above and other problems in the art, particularly a surface acoustic wave touch screen that can generate surface acoustic waves propagating on the screen in a first direction and a second direction by only one surface acoustic wave emitter, which reduces its power consumption.

The object is achieved by the features of the respective independent claim. Further embodiments are defined in the respective dependent claims.

For example, the surface acoustic wave emitter is a piezoelectric ceramics sheet.

For example, the periodic electrical signals provided by the driver module to the surface acoustic wave emitter are sine electrical signals.

For example, the first direction and the second direction are parallel to two adjacent sides of the screen respectively.

For example, the first reflecting unit, the second reflecting unit, the third reflecting unit and the fourth reflecting unit are disposed on sides of the screen respectively.

For example, the first direction and the second direction are perpendicular to each other.

For example, a cross-section of the surface acoustic wave emitter that is parallel to the screen is a square, and the first direction and the second direction are parallel to two adjacent sides of the screen respectively.

For example, each of the reflecting units comprises a reflecting stripe array comprising of a plurality of paralleled reflecting stripes.

For example, a density of the reflecting stripes increases gradually in a direction of each reflecting unit as they are away from the surface acoustic wave emitter.

For example, the surface acoustic wave emitter is attached on the screen.

For example, the first reflecting unit and the third reflecting unit are disposed on two sides that form an corner where the surface acoustic wave emitter is located respectively; the second reflecting unit is disposed on a side opposite to the first reflecting unit, and the fourth reflecting unit is disposed on a side opposite to the third reflecting unit; the first receiving transducer is disposed on a corner formed by a side where the second reflecting unit is located and an adjacent side to it, and the second receiving transducer is disposed on a corner formed by a side where the fourth reflecting unit is located and an adjacent side to it.

For example, the first reflecting unit and the second reflecting unit comprise reflecting stripes that are inclined in a direction from a corner where the first receiving transducer is located towards a corner where the surface acoustic wave emitter is located, and the reflecting stripes of these two reflecting units are parallel to each other.

For example, the third reflecting unit and the fourth reflecting unit comprise reflecting stripes that are inclined in a direction from a corner where the second receiving transducer is located towards a corner where the surface acoustic wave emitter is located, and the reflecting stripes of these two reflecting units are parallel to each other.

For example, the screen is a rectangle, and the reflecting stripes of each reflecting unit form an angle of 45 degree with a side of the screen where the reflecting unit is located.

At least one embodiment of the present invention further provides a touch display device including the above-mentioned surface acoustic wave touch screen provided in any embodiment of the present invention and a touch positioning circuit, the touch positioning circuit is connected with the first receiving transducer and the second receiving transducer of the surface acoustic wave touch screen and configured for receiving the first touch electrical signals converted by the first receiving transducer and the second touch electrical signals converted by the second receiving transducer and determining a touch position according to the first touch electrical signals and the second touch electrical signals.

### BRIEF DESCRIPTION OF THE DRAWINGS

In order to clearly illustrate the technical solution of the embodiments of the invention, the drawings of the embodiments will be briefly described in the following; it is obvious that the described drawings are only related to some embodiments of the invention and thus are not limitative of the invention.
Fig. 1 is a schematic diagram of a surface acoustic wave touch screen;
Fig. 2 is a schematic diagram of a surface acoustic wave touch screen provided in a first embodiment of the present invention;
Fig. 3 is a schematic diagram of expansion in a first direction and shrinkage in a second direction of the surface acoustic wave emitter;
Fig. 4 is a schematic diagram of shrinkage in a first direction and expansion in a second direction of the surface acoustic wave emitter;
Fig. 5 is a schematic diagram of a surface acoustic wave emitter located at the bottom left corner of the screen;
Fig. 6 is a schematic diagram of a surface acoustic wave emitter located at the top left corner of the screen;
Fig. 7 is a schematic diagram of a surface acoustic wave emitter located at the top right corner of the screen;
Fig. 8 is a schematic diagram of a surface acoustic wave touch screen provided in a second embodiment of the present invention;
Fig. 9 is a schematic diagram of a surface acoustic wave touch screen provided in a third embodiment of the present invention; and
Fig. 10 is a schematic diagram of a surface acoustic wave touch screen provided in a fourth embodiment of the present invention.

### Reference numerals:

1: screen; 2: first transmitting-receiving unit; 3: second transmitting-receiving unit; 4: first transmitting transducer; 5: first reflecting stripe array; 6: first receiving transducer; 7: second transmitting transducer; 8: second reflecting stripe array; 9: second receiving transducer; 5a, 5b: reflecting array; 8a, 8b: reflecting array; 10: surface acoustic wave touch screen; 11: screen; 12a: first reflecting unit; 12b: fourth reflecting unit; 12c: second reflecting unit; 12d: third reflecting unit; 13: surface acoustic wave emitter; 14: first receiving transducer; 15: second receiving transducer.

### DETAILED DESCRIPTION OF EMBODIMENTS

In order to make objects, technical details and advantages of the embodiments of the invention apparent, the technical solutions of the embodiments will be described in a clearly and fully understandable way in connection with the drawings related to the embodiments of the invention. Apparently, the scope of the invention is set out in the appended claims.

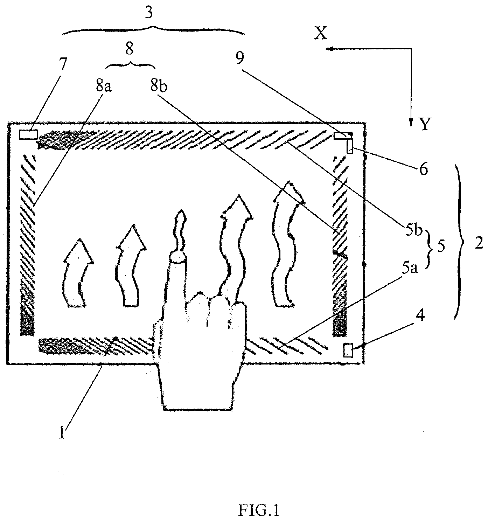

Fig. 1 is a schematic diagram of a surface acoustic wave touch screen. As shown in Fig. 1, the surface acoustic wave touch screen includes a screen 1, a first transmitting-receiving unit 2, and a second transmitting-receiving unit 3. The first transmitting-receiving unit 2 is configured to determine the coordinate on X axis of the user's touch position, and the second transmitting-receiving unit 3 is configured to determine the coordinate on Y axis of the position. The user's touch position may be identified according to the coordinates on X and Y axes of the position.

The first transmitting-receiving unit 2 includes a first transmitting transducer 4 disposed at the bottom right corner of the screen 1, a first reflecting stripe array 5, and a first receiving transducer 6 disposed at the top right corner of the screen; the first transmitting transducer 4 is configured to convert electrical signals into pulsed acoustic wave signals and direct them in the X axis direction; the first reflecting stripe array 5 includes reflecting arrays 5a, 5b, the reflecting array 5a is configured to continuously reflect acoustic wave signals to the reflecting array 5b when the acoustic wave signals propagate in X axis direction, and the reflecting array 5b is configured to reflect acoustic wave signals to the first receiving transducer 6. It can be understood that acoustic wave signals that are reflected at different positions on the X axis to the reflecting array 5b propagate to the first receiving transducer 6 in different paths, which makes the above-mentioned acoustic wave signals reach the first receiving transducer 6 at different timings such that acoustic wave signals reach the first receiving transducer 6 at different timings would superimpose with each other into a wider waveform signal. Furthermore, since the above-mentioned acoustic wave signals travel on Y axis for an equal distance, the time axis of the waveform signal resulting from the superposition of the above-mentioned acoustic wave signals can reflect the X axis coordinates of the above-mentioned acoustic wave signals. Thereby, when a user presses the screen 1 at any position, the acoustic wave signals toward the reflecting array 5b through this position would experience a certain attenuation that would be reflected on the above-mentioned superimposed waveform signal. According to the moment corresponding to the above-mentioned attenuation, it is possible to determine the coordinate on X axis of the position.

The second transmitting-receiving unit 3 is configured to determine the coordinate on Y axis of the user's touch position and includes a second transmitting transducer 7 disposed at the top left corner of the screen 1, a second reflecting stripe array 8 including reflecting arrays 8a and 8b, and a second receiving transducer 9 disposed at the top right corner of the screen. The second transmitting-receiving unit 3 determines the coordinate on Y axis of the user's touch position with a principle similar to the principle with which the first transmitting-receiving unit 2 determines the coordinate on X axis of the position, which will not be described any more here.

For the surface acoustic wave touch screen as shown in Fig. 1, the inventors has noted that in the above-mentioned surface acoustic wave touch screen, two transmitting transducers 4 and 7 are used to emit acoustic wave signals in X axis and Y axis directions respectively to generate surface acoustic waves propagating in transverse direction and longitudinal direction on the screen 1, and this configuration will consume a relatively large amount of energy, thereby resulting in high power consumption in the above-mentioned surface acoustic wave touch screen.

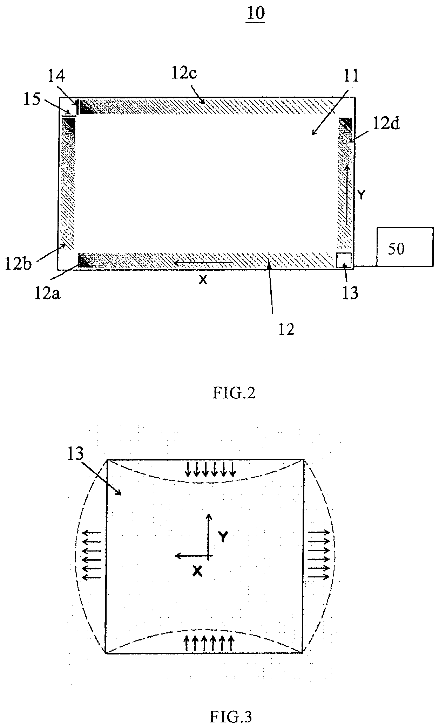

Fig. 2 is a schematic diagram of a surface acoustic wave touch screen provided in a first embodiment of the present invention. As shown in Fig. 2, the surface acoustic wave touch screen 10 includes a screen 11 and a driver module 50. On the surface of screen 11, the following components are provided: a surface acoustic wave emitter 13 made of a piezoelectric material for emitting first surface acoustic wave signals in the first direction X and emitting second surface acoustic wave signals in the second direction Y under the driving of periodic electrical signals provided by the driver module; a first reflecting unit 12a and a second reflecting unit 12c; a third reflecting unit 12d and a fourth reflecting unit 12b; and a first receiving transducer 14 and a second receiving transducer 15. The first reflecting unit 12a is configured to reflect the first surface acoustic wave signals to the second reflecting unit 12c, and the second reflecting unit 12c is configured to reflect the first surface acoustic wave signals to the first receiving transducer 14; the third reflecting unit 12d is configured to reflect the second surface acoustic wave signals to the fourth reflecting unit 12b, and the fourth reflecting unit 12b is configured to reflect the second surface acoustic wave signals to the second receiving transducer 15; the first receiving transducer 14 is configured to convert the received surface acoustic wave signals into first touch electrical signals, and the second receiving transducer 15 is configured to convert the received surface acoustic wave signals into second touch electrical signals so as to determine the touch position according to the first touch electrical signals and the second touch electrical signals.

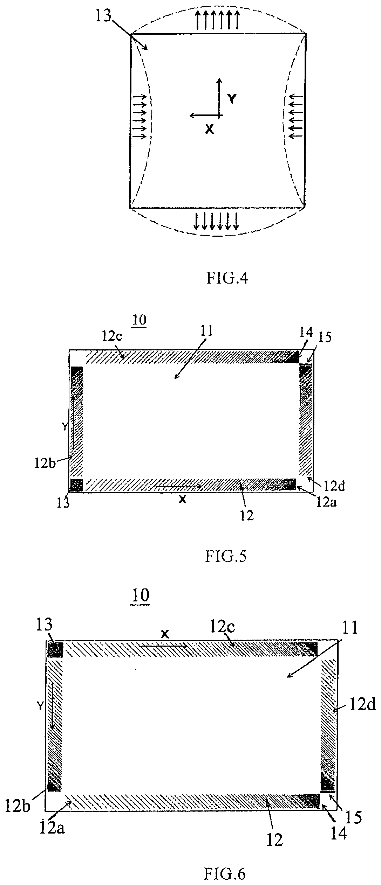

In this embodiment, the surface acoustic wave emitter 13 is made of a piezoelectric material. For example, it may be a piezoelectric ceramics sheet. Based on the D31 effect (a phenomenon in which an alternating electric field applied in the thickness direction causes deformation in a length direction and a width direction of the piezoelectric material), if the driver module provides periodic electrical signals to the surface acoustic wave emitter 13, a longitudinal vibration mode in the first direction X and the second direction Y of the surface acoustic wave emitter 13 will be excited, forcing the surface acoustic wave emitter 13 to undergo a stretch-contract motion in the first direction X or the second direction Y. The vibration mode in first direction X of the surface acoustic wave emitter 13 has a phase of a π/2 difference from that of the longitudinal vibration mode in the second direction Y. That is, as shown in Fig. 3 by the dotted lines, when the surface acoustic wave emitter 13 expands in the first direction X, it shrinks in the second direction Y; and as shown in Fig. 4 by dotted lines, when the surface acoustic wave emitter 13 expands in the second direction Y, it shrinks in the first direction X.

The stretch-contract motion in the first direction X of the surface acoustic wave emitter 13 will generate first surface acoustic wave signals toward the first direction X, and the stretch-contract motion in the second direction Y will generate the second surface acoustic wave signals toward the second direction Y; the first surface acoustic wave signals are reflected by the first reflecting unit 12a and the second reflecting unit 12c to the first receiving transducer 14; the second surface acoustic wave signals are reflected by the third reflecting unit 12d and the fourth reflecting unit 12b to the second receiving transducer 15; the first receiving transducer 14 converts the received surface acoustic wave signals into first touch electrical signals, and the second receiving transducer 15 converts the received surface acoustic wave signals into the second touch electrical signals; and it is possible to determine the touch position by analyzing the waveforms of first touch electrical signals and second touch electrical signals. Generally, in comparison of the waveform of first touch electrical signals against its corresponding preset reference waveform and comparison of the waveform of second touch electrical signals against its corresponding preset reference waveform, if the first touch electrical signals and the second touch electrical signals coincide with their corresponding preset reference waveforms exactly, the result indicates that there is no touch act. If the waveforms of the above-mentioned two touch electrical signals have attenuation gaps thereon respectively, the coordinates in the first direction X and the second direction Y are determined according to the positions of attenuation gaps so as to determine the position where the user touches the screen 11.

As can be known from above, in the present embodiment, only one surface acoustic wave emitter 13 is used to generate surface acoustic waves propagating over the screen 11 in the first direction X and the second direction Y, which reduces the power consumption of the surface acoustic wave touch screen as compared to the technical solution using two transmitting transducers.

In this embodiment, the first reflecting unit 12a, the second reflecting unit 12c, the third reflecting unit 12d and the fourth reflecting unit 12b are disposed on sides of the screen 11 respectively; the first direction X and the second direction Y are parallel to two adjacent sides of the screen 11 respectively and the first direction X is perpendicular to the second direction Y.

For example, the driver module provides the surface acoustic wave emitter 13 with periodic electrical signals that are sine electrical signals, a cross-section of the surface acoustic wave emitter 13 that is parallel to the screen 11 is of a square, and the first direction X and the second direction Y are parallel to two adjacent sides of the screen 11 respectively, such that the surface acoustic wave emitter 13 undergoes stretch-contract motions with consistent amplitudes in both the first direction X and the second direction Y, thereby generating surface acoustic waves with the same intensity in the first direction X and the second direction Y.

In this embodiment, the first reflecting unit 12a, the second reflecting unit 12c, the third reflecting unit 12d and the fourth reflecting unit 12b include reflecting stripe arrays comprising a plurality of parallel reflecting stripes.

In this embodiment, the surface acoustic wave emitter 13 is attached on the screen 11 such that it is not required to manufacture a structure for fixing the surface acoustic wave emitter 13 onto the screen 11, which makes the connection between the surface acoustic wave emitter 13 and the screen 11 simpler, and can accordingly reduce the width of the margin frame of the screen 11 and hence is helpful to realize a narrow margin frame if the above-mentioned structure is omitted.

In this embodiment, the screen 11 is of a parallelogram; the surface acoustic wave emitter 13, the first receiving transducer 14 and the second receiving transducer 15 are disposed on corners of the screen 11, and the first reflecting unit 12a and the third reflecting unit 12d are disposed on two sides of the corner at which the surface acoustic wave emitter 13 is provided; the second reflecting unit 12c is disposed on a side opposite to the first reflecting unit 12a, and the fourth reflecting unit 12b is disposed on a side opposite to the third reflecting unit 12d; the first receiving transducer 14 is disposed on the corner formed by the side where the second reflecting unit 12c is located and the adjacent side, and the second receiving transducer 15 is disposed on the corner formed by the side where the fourth reflecting unit 12b is located and the adjacent side.

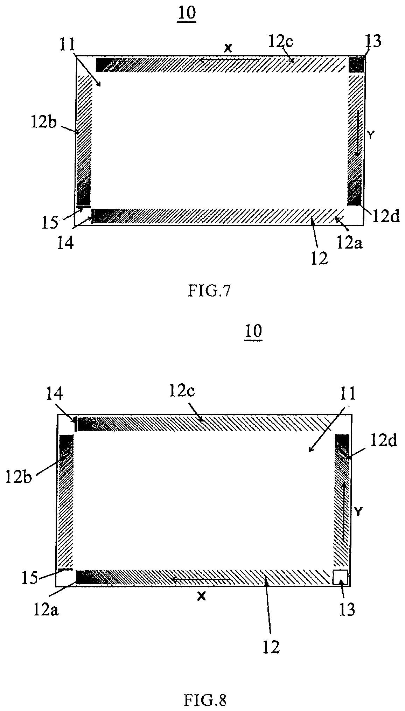

In this embodiment, for example, both the corner where the first receiving transducer 14 is located and the corner where the second receiving transducer 15 is located are opposite corners to the corner where the surface acoustic wave emitter 13 is located. For example, as shown in Fig. 2, the surface acoustic wave emitter 13 is located on the bottom right corner of the screen 11, while the first receiving transducer 14 and the second receiving transducer 15 are located on the top left corner of the screen. Of course, as shown in Fig. 5, it is also possible that the surface acoustic wave emitter 13 is located on the bottom left corner of the screen 11, and the first receiving transducer 14 and the second receiving transducer 15 are located on the top right corner of the screen. As shown in Fig. 6, the surface acoustic wave emitter 13 is located on the top left corner of the screen 11, and the first receiving transducer 14 and the second receiving transducer 15 are located on the bottom right corner of the screen. As shown in Fig. 7, the surface acoustic wave emitter 13 is located on the top right corner of the screen 11, and the first receiving transducer 14 and the second receiving transducer 15 are located on the bottom left corner of the screen.

With reference to Fig. 2 as an example, in which the surface acoustic wave emitter 13 is located on the bottom right corner of the screen 11 and the first receiving transducer 14 and the second receiving transducer 15 are located on the top left corner of the screen, in the surface acoustic wave touch screen 10, the first reflecting unit 12a and the second reflecting unit 12c comprise reflecting stripes that are inclined in the direction from the corner where the first receiving transducer 14 and the second receiving transducer 15 are located (namely the top left corner) toward the corner where the surface acoustic wave emitter 13 is located (namely the bottom right corner), and the reflecting stripes of the first reflecting unit 12a and the second reflecting unit 12c are parallel to each other; the third reflecting unit 12d and the fourth reflecting unit 12b comprise reflecting stripes that are inclined in the direction from the corner where the second receiving transducer 15 is located (namely the top left corner) toward the corner where the surface acoustic wave emitter 13 is located (namely the bottom right corner), and the reflecting stripes of the third reflecting unit 12d and the fourth reflecting unit 12b are parallel to each other. In this way, when the surface acoustic wave emitter 13 emits surface acoustic wave signals towards the first direction X and the second direction Y, the first reflecting unit 12a on the bottom side of the screen 11 reflects the surface acoustic wave to the second reflecting unit 12c on the top side of the screen 11, the second reflecting unit 12c reflects the surface acoustic wave signals to the first receiving transducer 14, and the first receiving transducer 14 converts the received surface acoustic wave signals into first touch electrical signals; the third reflecting unit 12d on the right side of the screen 11 reflects the surface acoustic wave signals to the fourth reflecting unit 12b on the left side of the screen 11, the fourth reflecting unit 12b further reflects the surface acoustic wave signals to the second receiving transducer 15, and the second receiving transducer 15 converts the received surface acoustic wave signals into the second touch electrical signals; therefore, it is possible to determine the position where the user presses the screen 11 and identify the touch act according to the attenuation gaps in the waveform of first touch electrical signals and second touch electrical signals when the user presses the screen 11 at any position.

In this embodiment, for example, the screen 11 is of an rectangle, the reflecting stripes of the reflecting units on each side of the screen 11 form an angle of 45 degree with the side of the screen 11, such that when the first reflecting unit 12a reflects the surface acoustic wave signals traveling in the first direction X to the second reflecting unit 12c and the third reflecting unit 12d reflects the surface acoustic wave signals traveling in the second direction Y to the fourth reflecting unit 12b, the surface acoustic wave signals will move from the bottom to the top of screen 11 vertically and move from the right end to the left end of screen 11 vertically. In such a case, the reflection path for surface acoustic wave signals is the simplest, which allows for simple waveforms of first touch electrical signals and second touch electrical signals, thereby facilitating analyzing positions of press by the user.

In the surface acoustic wave touch screen 10 provided in at least one embodiment of the present invention, its surface acoustic wave emitter 13 is made of a piezoelectric material, and while driven by periodic electrical signals, it can undergo stretch-contract motions in the first direction X and the second direction Y, thereby generating first surface acoustic wave signals and second surface acoustic wave signals traveling in the first direction X and the second direction Y respectively, which travel to the first receiving transducer 14 and the second receiving transducer 15 respectively; the first receiving transducer 14 converts the received surface acoustic wave signals into first touch electrical signals, and the second receiving transducer 15 converts the received surface acoustic wave signals into second touch electrical signals; according to the first touch electrical signals and the second touch electrical signals, it is possible to determine coordinates on the first direction X and second direction Y of the user's touch position, thereby determining the position of user's touch. The surface acoustic wave touch screen 10 provided in at least one embodiment of the present invention generates surface acoustic waves propagating on the screen 11 in first direction X and the second direction Y by only one surface acoustic wave emitter 13, which reduces the power consumption.

Fig. 8 is a schematic diagram of the surface acoustic wave touch screen provided in a second embodiment of the present invention. As shown in Fig. 8 , as compared to the above-mentioned first embodiment, the surface acoustic wave touch screen 10 provided in the present embodiment also includes a screen 11, a driver module, reflecting units, a surface acoustic wave emitter 13, a first receiving transducer 14, and a second receiving transducer 15. Due to the detailed description in the above-mentioned first embodiment, identical parts between the present embodiment and the first embodiment will not be described any more herein.

Only differences between the surface acoustic wave touch screen 10 provided in the present embodiment and the above-mentioned first embodiment will be described in detail below. In this embodiment, the corner where the first receiving transducer 14 is located is the opposite corner to the corner where the surface acoustic wave emitter 13 is located, and the corner where the second receiving transducer 15 is located is the adjacent corner to the corner where the surface acoustic wave emitter 13 is located.

Considering the surface acoustic wave emitter 13 on the bottom right corner of screen 11, which is shown in Fig. 8, as an example, the first receiving transducer 14 is on the top left corner of screen 11, and the second receiving transducer 15 is on the bottom left corner of screen 11. In such case, the first reflecting unit 12a and the second reflecting unit 12c comprise reflecting stripes that are inclined in the direction from the corner where the first receiving transducer 14 is located (namely the top left corner) towards the corner where the surface acoustic wave emitter 13 is located (namely the bottom right corner), and the reflecting stripes of the first reflecting unit 12a and second reflecting unit 12c are parallel to each other; and the third reflecting unit 12d comprises reflecting stripes that are inclined in the direction from the corner where the surface acoustic wave emitter 13 is located (namely the bottom right corner) towards its opposite corner (namely the top left corner), and the fourth reflecting unit 12b comprises reflecting stripes that are inclined in the direction from the corner where the second receiving transducer 15 is located (namely the bottom left corner) towards its opposite corner), and the third reflecting unit 12d and the fourth reflecting unit 12b comprise reflecting stripes perpendicular to each other; therefore the first reflecting unit 12a and the second reflecting unit 12c can reflect the surface acoustic wave signals traveling in the first direction X to the first receiving transducer 14; and the third reflecting unit 12d and the fourth reflecting unit 12b can reflect the surface acoustic wave signals traveling in the second direction Y to the second receiving transducer 15.

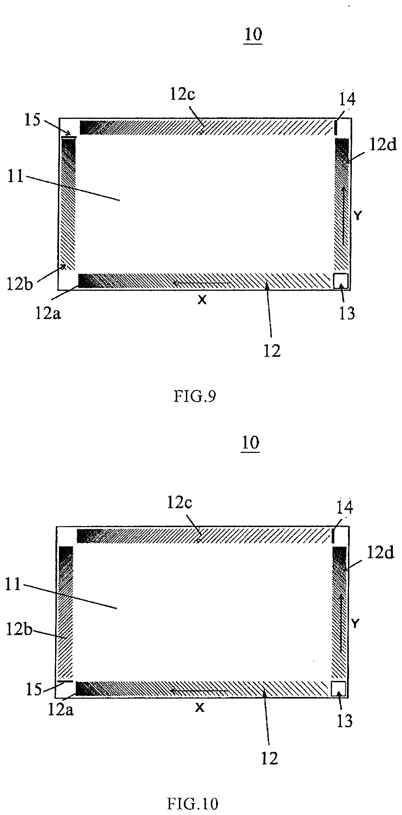

Fig. 9 is a schematic diagram of the surface acoustic wave touch screen provided in a third embodiment of the present invention. As shown in Fig. 9, as compared to the above-mentioned first and second embodiments, the surface acoustic wave touch screen 10 provided in the present embodiment also includes a screen 11, a driver module, reflecting units, a surface acoustic wave emitter 13, a first receiving transducer 14 and a second receiving transducer 15. Due to the detailed description in the above-mentioned first embodiment, identical parts between the present embodiment and the first and second embodiments will not be described any more herein.

Only differences between the surface acoustic wave touch screen 10 provided in the present embodiment and the above-mentioned first and second embodiments will be described in detail below. In this embodiment, the corner where the first receiving transducer 14 is located is the adjacent corner to the corner where the surface acoustic wave emitter 13 is located, and the corner where the second receiving transducer 15 is located is the opposite corner to the corner where the surface acoustic wave emitter 13 is located.

Considering the surface acoustic wave emitter 13 on the bottom right corner of screen 11, which is shown in Fig. 9, as an example, the first receiving transducer 14 is on the top right corner of screen 11, and the second receiving transducer 15 is on the top left corner of screen 11. In such cases, the first reflecting unit 12a comprises reflecting stripes that are inclined in the direction from the corner where the surface acoustic wave emitter 13 is located (namely the bottom right corner) towards its opposite corner (namely the top left corner), the second reflecting unit 12c comprises reflecting stripes that are inclined in the direction from the corner where the first receiving transducer 14 is located (namely the top right corner) towards its opposite corner (namely the bottom left corner), and the reflecting stripes of the first reflecting unit 12a and the second reflecting unit 12c are perpendicular to each other. The third reflecting unit 12d and the fourth reflecting unit 12b comprise reflecting stripes that are inclined in the direction from the corner where the second receiving transducer 15 is located (namely the top left corner) towards the corner where the surface acoustic wave emitter 13 is located (namely the bottom right corner), and the reflecting stripes of the third reflecting unit 12d and the fourth reflecting unit 12b are parallel to each other, such that the first reflecting unit 12a and the second reflecting unit 12c can reflect surface acoustic wave signals traveling in the first direction X to the first receiving transducer 14, and the third reflecting unit 12d and the fourth reflecting unit 12b can reflect surface acoustic wave signals traveling in the second direction Y to the second receiving transducer 15.

Fig. 10 is a schematic diagram of the surface acoustic wave touch screen provided in a fourth embodiment of the present invention. As shown in Fig. 10, as compared to the above-mentioned first, second and third embodiments, the surface acoustic wave touch screen 10 provided in the present embodiment also includes a screen 11, a driver module, reflecting units, a surface acoustic wave emitter 13, a first receiving transducer 14 and a second receiving transducer 15. Due to the detailed description in the above-mentioned first embodiment, identical parts between the present embodiment and the first, second and third embodiments will not be described any more herein.

Only differences between the surface acoustic wave touch screen 10 provided in the present embodiment and the above-mentioned first embodiment will be described in detail below. In this embodiment, the corner where the first receiving transducer 14 is located is the adjacent corner to the corner where the surface acoustic wave emitter 13 is located, and the corner where the second receiving transducer 15 is located is the adjacent corner to the corner where the surface acoustic wave emitter 13 is located.

Considering the surface acoustic wave emitter 13 on the bottom right corner of screen 11, which is shown in Fig. 10, as an example, the first receiving transducer 14 is on the top right corner of screen 11, and the second receiving transducer 15 is on the bottom left corner of screen 11. In such cases, the first reflecting unit 12a comprises reflecting stripes that are inclined in the direction from the corner where the surface acoustic wave emitter 13 is located (namely the bottom right corner) towards its opposite corner (namely the top left corner), the second reflecting unit 12c comprises reflecting stripes that are inclined in the direction from the corner where the first receiving transducer 14 is located (namely the top right corner) towards its opposite corner (namely the bottom left corner), and the reflecting stripes of the first reflecting unit 12a and the second reflecting unit 12c are perpendicular to each other. The third reflecting unit 12d comprises reflecting stripes that are inclined in the direction from the corner where the surface acoustic wave emitter 13 is located (namely the bottom right corner) towards its opposite corner (namely the top left corner), the fourth reflecting unit 12b comprises reflecting stripes that are inclined in the direction from the corner where the second receiving transducer 15 is located (namely the bottom left corner) towards its opposite corner (namely the top right corner), and the reflecting stripes of the third reflecting unit 12d and the fourth reflecting unit 12b are perpendicular to each other. Therefore, the first reflecting unit 12a and the second reflecting unit 12c can reflect surface acoustic wave signals traveling in the first direction X to the first receiving transducer 14, and the third reflecting unit 12d and the fourth reflecting unit 12b can reflect surface acoustic wave signals traveling in the second direction Y to the second receiving transducer 15.

At least one embodiment of the present invention further provides a touch display device including the surface acoustic wave touch screen provided in the above-mentioned embodiments of the present invention and a touch positioning circuit connected with the first receiving transducer and the second receiving transducer of the surface acoustic wave touch screen and configured for receiving the first touch electrical signals converted by the first receiving transducer and the second touch electrical signals converted by the second receiving transducer and determining touch position according to the first touch electrical signals and second touch electrical signals.

The touch display device provided in at least one embodiment adopts the surface acoustic wave touch screen provided in the above-mentioned embodiments of the present invention, which can reduce power consumption of the touch screen.

What are described above is related to the illustrative embodiments of the disclosure only and not limitative to the scope of the disclosure; the scopes of the disclosure are defined by the accompanying claims.

## Claims

1. A surface acoustic wave touch screen (10) comprising a screen (11) and a driver module (50), the screen (11) being provided on its surface with:
only one surface acoustic wave emitter (13) made of a piezoelectric material;
a first reflecting unit (12a) and a second reflecting unit (12c);
a third reflecting unit (12d) and a fourth reflecting unit (12b); and
a first receiving transducer (14) and a second receiving transducer (15), wherein
the first reflecting unit (12a) is configured to reflect the first surface acoustic wave signals to the second reflecting unit (12c),
the second reflecting unit (12c) is configured to reflect the first surface acoustic wave signals to the first receiving transducer (14),
the third reflecting unit (12d) is configured to reflect the second surface acoustic wave signals to the fourth reflecting unit (12b),
the fourth reflecting unit (12b) is configured to reflect the second surface acoustic wave signals to the second receiving transducer (15),
the first receiving transducer (14) is configured to convert received surface acoustic wave signals into first touch electrical signals, the second receiving transducer (15) is configured to convert received surface acoustic wave signals into second touch electrical signals, to determine a touch position according to the first touch electrical signals and the second touch electrical signals;
wherein the screen (11) is a parallelogram and the only one surface acoustic wave emitter (13), the first receiving transducer (14), and the second receiving transducer (15) are disposed on corners of the screen, wherein the only one surface acoustic wave emitter (13) is disposed on a first corner of the screen (11), **characterized in that**
the first receiving transducer (14) and the second receiving transducer (15) are disposed on a second corner opposite to the first corner,
the only one surface acoustic wave emitter (13) is attached on the screen (11), and
the only one surface acoustic wave emitter (13) is configured for emitting first surface acoustic wave signals in a first direction (X) and for emitting second surface acoustic wave signals in a second direction (Y), upon being driven by periodic electrical signals provided by the driver module (50).

2. The surface acoustic wave touch screen (10) according to claim 1, wherein the first direction (X) and the second direction (Y) are parallel to two adjacent sides of the screen (11) respectively.

3. The surface acoustic wave touch screen (10) according to claim 1 or 2, wherein the first reflecting unit (12a), the second reflecting unit (12c), the third reflecting unit (12d) and the fourth reflecting unit (12b) are disposed on sides of the screen (11) respectively.

4. The surface acoustic wave touch screen (10) according to any one of claims 1-3, wherein the first direction (X) and the second direction (Y) are perpendicular to each other, and a cross-section of the only one surface acoustic wave emitter (13) that is parallel to the screen (11) is a square, and the first direction (X) and the second direction (Y) are parallel to two adjacent sides of the screen (11) respectively.

5. The surface acoustic wave touch screen (10) according to claim 1, wherein each of the reflecting units (12a-12d) comprises a reflecting stripe array comprising a plurality of paralleled reflecting stripes.

6. The surface acoustic wave touch screen (10) according to claim 5, wherein a density of the reflecting stripes increases gradually in a direction of each reflecting unit (12a-12d) as they are away from the only one surface acoustic wave emitter (13).

7. The surface acoustic wave touch screen (10) according to claim 1, wherein
the first reflecting unit (12a) and the third reflecting unit (12d) are disposed on two sides that form a corner where the only one surface acoustic wave emitter (13) is located respectively;
the second reflecting unit (12c) is disposed on a side opposite to the first reflecting unit (12a), and the fourth reflecting unit (12b) is disposed on a side opposite to the third reflecting unit (12d);
the first receiving transducer (14) is disposed on a corner formed by a side where the second reflecting unit (12c) is located and an adjacent side to it; and the second receiving transducer (15) is disposed on a corner formed by a side where the fourth reflecting unit (12b) is located and an adjacent side to it.

8. The surface acoustic wave touch screen (10) according to claim 7, wherein each of the reflecting units (12a-12d) comprises a reflecting stripe array comprising of a plurality of paralleled reflecting stripes.

9. The surface acoustic wave touch screen (10) according to claim 8, wherein
the first reflecting unit (12a) and the second reflecting unit (12c) comprise reflecting stripes that are inclined in a direction from a corner where the first receiving transducer (14) is located towards a corner where the only one surface acoustic wave emitter (13) is located, and the reflecting stripes of these two reflecting units (12a, 12c) are parallel to each other.

10. The surface acoustic wave touch screen (10) according to claim 8, wherein
the third reflecting unit (12d) and the fourth reflecting unit (12b) comprise reflecting stripes that are inclined in a direction from a corner where the second receiving transducer (15) is located towards a corner where the only one surface acoustic wave emitter (13) is located, and the reflecting stripes of these two reflecting units (12d, 12b) are parallel to each other.

11. The surface acoustic wave touch screen (10) according to any one of claims 9-10, wherein the screen (11) is a rectangle, and the reflecting stripes of each reflecting unit (12a-12d) form an angle of 45 degree with a side of the screen (11) where the reflecting unit (12a-12d) is located.

12. A touch display device comprising the surface acoustic wave touch screen (10) of any one of claims 1-11 and a touch positioning circuit,
wherein the touch positioning circuit is connected with the first receiving transducer (14) and the second receiving transducer (15) of the surface acoustic wave touch screen (10) and configured for receiving the first touch electrical signals converted by the first receiving transducer (14) and the second touch electrical signals converted by the second receiving transducer (15) and determining a touch position according to the first touch electrical signals and the second touch electrical signals.

## Patentansprüche

1. Akustikoberflächenwellen-Touch-Bildschirm (10) mit einem Bildschirm (11) und einem Treibermodul (50), wobei der Bildschirm (11) auf seiner Oberfläche versehen ist mit:
nur einem Akustikoberflächenwellensender (13), der aus einem piezoelektrischen Material besteht;
einer ersten Reflexionseinheit (12a) und einer zweiten Reflexionseinheit (12c);
einer dritten Reflexionseinheit (12d) und einer vierten Reflexionseinheit (12b); und
einen ersten Empfangswandler (14) und einen zweiten Empfangswandler (15), wobei
die erste Reflexionseinheit (12a) konfiguriert ist, die ersten Akustikoberflächenwellensignale an die zweite Reflexionseinheit (12c) zu reflektieren,
die zweite Reflexionseinheit (12c) konfiguriert ist, die ersten Akustikoberflächenwellensignale an den ersten Empfangswandler (14) zu reflektieren,
die dritte Reflexionseinheit (12d) konfiguriert ist, die zweiten Akustikoberflächenwellensignale an die vierte Reflexionseinheit (12b) zu reflektieren,
die vierte Reflexionseinheit (12b) konfiguriert ist, die zweiten Akustikoberflächenwellensignale an den zweiten Empfangswandler (15) zu reflektieren,
der erste Empfangswandler (14) konfiguriert ist, empfangene Akustikoberflächenwellensignale in erste elektrische Berührungssignale umzuwandeln, der zweite Empfangswandler (15) konfiguriert ist, empfangene Akustikoberflächenwellensignale in zweite elektrische Berührungssignale umzuwandeln, um eine Berührungsposition gemäß den ersten elektrischen Berührungssignalen und den zweiten elektrischen Berührungssignalen zu bestimmen;
wobei der Bildschirm (11) ein Parallelogramm ist und der einzige Akustikoberflächenwellensender (13), der erste Empfangswandler (14) und der zweite Empfangswandler (15) an Ecken des Bildschirms angeordnet sind, wobei der einzige Akustikoberflächenwellensender (13) an einer ersten Ecke des Bildschirms (11) angeordnet ist, **dadurch gekennzeichnet, dass**
der erste Empfangswandler (14) und der zweite Empfangswandler (15) an einer zweiten Ecke gegenüber der ersten Ecke angeordnet sind,
der einzige Akustikoberflächenwellensender (13) an dem Bildschirm (11) angebracht ist, und
der einzige Akustikoberflächenwellensender (13) konfiguriert ist, erste Akustikoberflächenwellensignale in einer ersten Richtung (X) auszusenden und zweite Akustikoberflächenwellensignale in einer zweiten Richtung (Y) auszusenden, wenn er durch periodische elektrische Signale angesteuert wird, die von dem Treibermodul (50) bereitgestellt werden.

2. Akustikoberflächenwellen-Touch-Bildschirm (10) nach Anspruch 1, wobei die erste Richtung (X) und die zweite Richtung (Y) jeweils parallel zu zwei benachbarten Seiten des Bildschirms (11) sind.

3. Akustikoberflächenwellen-Touch-Bildschirm (10) nach Anspruch 1 oder 2, wobei die erste Reflexionseinheit (12a), die zweite Reflexionseinheit (12c), die dritte Reflexionseinheit (12d) und die vierte Reflexionseinheit (12b) jeweils an Seiten des Bildschirms (11) angeordnet sind.

4. Akustikoberflächenwellen-Touch-Bildschirm (10) nach einem der Ansprüche 1 bis 3, wobei die erste Richtung (X) und die zweite Richtung (Y) senkrecht zueinander sind, und ein Querschnitt des einzigen Akustikoberflächenwellensenders (13), der parallel zum Bildschirm (11) ist, ein Quadrat ist, und die erste Richtung (X) und die zweite Richtung (Y) jeweils parallel zu zwei benachbarten Seiten des Bildschirms (11) sind.

5. Akustikoberflächenwellen-Touch-Bildschirm (10) nach Anspruch 1, wobei jede der Reflexionseinheiten (12a-12d) eine reflektierende Streifenanordnung aufweist, die eine Vielzahl von parallelen reflektierenden Streifen aufweist.

6. Akustikoberflächenwellen-Touch-Bildschirm (10) nach Anspruch 5, wobei die Dichte der reflektierenden Streifen in einer Richtung jeder Reflexionseinheit (12a-12d) graduell zunimmt, wie sie von dem einzigen Akustikoberflächenwellensender (13) entfernt sind.

7. Akustikoberflächenwellen-Touch-Bildschirm (10) nach Anspruch 1, wobei
die erste Reflexionseinheit (12a) und die dritte Reflexionseinheit (12d) auf zwei Seiten angeordnet sind, die eine Ecke bilden, in der sich jeweils der einzige Akustikoberflächenwellensender (13) befindet;
die zweite Reflexionseinheit (12c) ist auf einer Seite gegenüber der ersten Reflexionseinheit (12a) angeordnet, und die vierte Reflexionseinheit (12b) ist auf einer Seite gegenüber der dritten Reflexionseinheit (12d) angeordnet;
der erste Empfangswandler (14) an einer Ecke angeordnet ist, die von einer Seite, an der die zweite Reflexionseinheit (12c) angeordnet ist, und einer benachbarten Seite dazu gebildet wird; und der zweite Empfangswandler (15) an einer Ecke angeordnet ist, die von einer Seite, an der die vierte Reflexionseinheit (12b) angeordnet ist, und einer benachbarten Seite dazu gebildet wird.

8. Akustikoberflächenwellen-Touch-Bildschirm (10) nach Anspruch 7, wobei jede der Reflexionseinheiten (12a-12d) ein Reflexionsstreife-Array aufweist, das aus einer Vielzahl von parallel angeordneten Reflexionsstreifen besteht.

9. Akustikoberflächenwellen-Touch-Bildschirm (10) nach Anspruch 8, wobei die erste Reflexionseinheit (12a) und die zweite Reflexionseinheit (12c) Reflexionsstreifen aufweisen, die in einer Richtung von einer Ecke, in der sich der erste Empfangswandler (14) befindet, zu einer Ecke, in der sich der einzige Akustikoberflächenwellensender (13) befindet, geneigt sind, und die Reflexionsstreifen dieser beiden Reflexionseinheiten (12a, 12c) parallel zueinander sind.

10. Akustikoberflächenwellensender (10) nach Anspruch 8, wobei die dritte Reflexionseinheit (12d) und die vierte Reflexionseinheit (12b) Reflexionsstreifen aufweisen, die in einer Richtung von einer Ecke, in der sich der zweite Empfangswandler (15) befindet, zu einer Ecke, in der sich der einzige Akustikoberflächenwellensender (13) befindet, geneigt sind, und die Reflexionsstreifen dieser beiden Reflexionseinheiten (12d, 12b) parallel zueinander sind.

11. Akustikoberflächenwellen-Touch-Bildschirm (10) nach einem der Ansprüche 9-10, wobei der Bildschirm (11) ein Rechteck ist und die Reflexionsstreifen jeder Reflexionseinheit (12a-12d) einen Winkel von 45 Grad mit einer Seite des Bildschirms (11) bilden, an der die Reflexionseinheit (12a-12d) angeordnet ist.

12. Touch-Anzeige-Vorrichtung mit dem Akustikoberflächenwellen-Touch-Bildschirm (10) nach einem der Ansprüche 1-11 und einer Berührungspositionsbestimmungsschaltung,
wobei die Berührungspositionsbestimmungsschaltung mit dem ersten Empfangswandler (14) und dem zweiten Empfangswandler (15) des Akustikoberflächenwellen-Touch-Bildschirms (10) verbunden ist und konfiguriert ist, die ersten elektrischen Berührungssignale, die von dem ersten Empfangswandler (14) umgewandelt werden, und die zweiten elektrischen Berührungssignale, die von dem zweiten Empfangswandler (15) umgewandelt werden, empfängt und eine Berührungsposition gemäß den ersten elektrischen Berührungssignalen und den zweiten elektrischen Berührungssignalen bestimmt.

## Revendications

1. Écran tactile à ondes acoustiques de surface (10) comprenant un écran (11) et un module de dispositif de pilotage (50), l'écran (11) étant muni, sur sa surface, de :
seulement un émetteur d'ondes acoustiques de surface (13) qui est constitué par un matériau piézoélectrique ;
une première unité réfléchissante (12a) et une deuxième unité réfléchissante (12c) ;
une troisième unité réfléchissante (12d) et une quatrième unité réfléchissante (12b) ; et
un premier transducteur de réception (14) et un second transducteur de réception (15) ; dans lequel :
la première unité réfléchissante (12a) est configurée pour réfléchir les premiers signaux d'ondes acoustiques de surface sur la deuxième unité réfléchissante (12c) ;
la deuxième unité réfléchissante (12c) est configurée pour réfléchir les premiers signaux d'ondes acoustiques de surface sur le premier transducteur de réception (14) ;
la troisième unité réfléchissante (12d) est configurée pour réfléchir les seconds signaux d'ondes acoustiques de surface sur la quatrième unité réfléchissante (12b) ;
la quatrième unité réfléchissante (12b) est configurée pour réfléchir les seconds signaux d'ondes acoustiques de surface sur le second transducteur de réception (15) ;
le premier transducteur de réception (14) est configuré pour convertir les signaux d'ondes acoustiques de surface reçus selon des premiers signaux électriques de contact tactile, le second transducteur de réception (15) est configuré pour convertir les signaux d'ondes acoustiques de surface reçus selon des seconds signaux électriques de contact tactile, afin de déterminer une position de contact tactile en fonction des premiers signaux électriques de contact tactile et des seconds signaux électriques de contact tactile ;
dans lequel l'écran (11) est un parallélogramme et le seulement un émetteur d'ondes acoustiques de surface (13), le premier transducteur de réception (14) et le second transducteur de réception (15) sont disposés au niveau d'angles de l'écran, dans lequel le seulement un émetteur d'ondes acoustiques de surface (13) est disposé au niveau d'un premier angle de l'écran (11) ;
**caractérisé en ce que** :
le premier transducteur de réception (14) et le second transducteur de réception (15) sont disposés au niveau d'un deuxième angle qui est opposé au premier angle :
le seulement un émetteur d'ondes acoustiques de surface (13) est fixé sur l'écran (11) ; et
le seulement un émetteur d'ondes acoustiques de surface (13) est configuré pour émettre des premiers signaux d'ondes acoustiques de surface dans une première direction (X) et pour émettre des seconds signaux d'ondes acoustiques de surface dans une seconde direction (Y), suite à son pilotage au moyen de signaux électriques périodiques qui sont fournis par le module de dispositif de pilotage (50).

2. Écran tactile à ondes acoustiques de surface (10) selon la revendication 1, dans lequel la première direction (X) et la seconde direction (Y) sont respectivement parallèles à deux côtés adjacents de l'écran (11).

3. Écran tactile à ondes acoustiques de surface (10) selon la revendication 1 ou 2, dans lequel la première unité réfléchissante (12a), la deuxième unité réfléchissante (12c), la troisième unité réfléchissante (12d) et la quatrième unité réfléchissante (12b) sont respectivement disposées sur des côtés de l'écran (11).

4. Écran tactile à ondes acoustiques de surface (10) selon l'une quelconque des revendications 1 à 3, dans lequel la première direction (X) et la seconde direction (Y) sont perpendiculaires l'une à l'autre, et une section en coupe transversale du seulement un émetteur d'ondes acoustiques de surface (13) qui est parallèle à l'écran (11) est un carré, et la première direction (X) et la seconde direction (Y) sont respectivement parallèles à deux côtés adjacents de l'écran (11).

5. Écran tactile à ondes acoustiques de surface (10) selon la revendication 1, dans lequel chacune des unités réfléchissantes (12a-12d) comprend un réseau de bandes réfléchissantes qui comprend une pluralité de bandes réfléchissantes parallélisées.

6. Écran tactile à ondes acoustiques de surface (10) selon la revendication 5, dans lequel une densité des bandes réfléchissantes augmente de façon progressive dans une direction de chaque unité réfléchissante (12a-12d) plus ces unités réfléchissantes sont éloignées du seulement un émetteur d'ondes acoustiques de surface (13).

7. Écran tactile à ondes acoustiques de surface (10) selon la revendication 1, dans lequel :
la première unité réfléchissante (12a) et la troisième unité réfléchissante (12d) sont respectivement disposées sur deux côtés qui forment un angle au niveau duquel le seulement un émetteur d'ondes acoustiques de surface (13) est localisé ;
la deuxième unité réfléchissante (12c) est disposée sur un côté qui est opposé à la première unité réfléchissante (12a) et la quatrième unité réfléchissante (12b) est disposée sur un côté qui est opposé à la troisième unité réfléchissante (12d) ;
le premier transducteur de réception (14) est disposé au niveau d'un angle qui est formé par un côté au niveau duquel la deuxième unité réfléchissante (12c) est localisée et par un côté qui lui est adjacent ; et le second transducteur de réception (15) est disposé au niveau d'un angle qui est formé par un côté au niveau duquel la quatrième unité réfléchissante (12b) est localisée et par un côté qui lui est adjacent.

8. Écran tactile à ondes acoustiques de surface (10) selon la revendication 7, dans lequel chacune des unités réfléchissantes (12a-12d) comprend un réseau de bandes réfléchissantes qui comprend une pluralité de bandes réfléchissantes parallélisées.

9. Écran tactile à ondes acoustiques de surface (10) selon la revendication 8, dans lequel :
la première unité réfléchissante (12a) et la deuxième unité réfléchissante (12c) comprennent des bandes réfléchissantes qui sont inclinées dans une direction depuis un angle au niveau duquel le premier transducteur de réception (14) est localisé en direction d'un angle au niveau duquel le seulement un émetteur d'ondes acoustiques de surface (13) est localisé, et les bandes réfléchissantes de ces deux unités réfléchissantes (12a, 12c) sont parallèles les unes aux autres.

10. Écran tactile à ondes acoustiques de surface (10) selon la revendication 8, dans lequel :
la troisième unité réfléchissante (12d) et la quatrième unité réfléchissante (12b) comprennent des bandes réfléchissantes qui sont inclinées dans une direction depuis un angle au niveau duquel le second transducteur de réception (15) est localisé en direction d'un angle au niveau duquel le seulement un émetteur d'ondes acoustiques de surface (13) est localisé, et les bandes réfléchissantes de ces deux unités réfléchissantes (12d, 12b) sont parallèles les unes aux autres.

11. Écran tactile à ondes acoustiques de surface (10) selon l'une quelconque des revendications 9 et 10, dans lequel l'écran (11) est un rectangle, et les bandes réfléchissantes de chaque unité réfléchissante (12a-12d) forment un angle de 45 degrés avec un côté de l'écran (11) au niveau duquel l'unité réfléchissante (12a-12d) est localisée.

12. Dispositif d'affichage tactile comprenant l'écran tactile à ondes acoustiques de surface (10) selon l'une quelconque des revendications 1 à 11 et un circuit de positionnement de contact tactile,
dans lequel le circuit de positionnement de contact tactile est connecté au premier transducteur de réception (14) et au second transducteur de réception (15) de l'écran tactile à ondes acoustiques de surface (10) et il est configuré pour recevoir les premiers signaux électriques de contact tactile qui sont convertis par le premier transducteur de réception (14) et les seconds signaux électriques de contact tactile qui sont convertis par le second transducteur de réception (15) et pour déterminer une position de contact tactile en fonction des premiers signaux électriques de contact tactile et des seconds signaux électriques de contact tactile.
